# EUROPÄISCHE PATENTSCHRIFT

(11) **EP 2 303 732 B1**
(45) Veröffentlichungstag und Bekanntmachung des Hinweises auf die Patenterteilung: **21.03.2012**
(21) Anmeldenummer: 09797339.0
(22) Anmeldetag: 15.07.2009
(51) Int. Cl.: B65G 47/14, B65G 47/256

(54) **VORRICHTUNG UND VERFAHREN ZUM VEREINZELN VON ZYLINDRISCHEN KÖRPERN**
APPARATUS FOR, AND METHOD OF, SEPARATING CYLINDRICAL BODIES
DISPOSITIF ET PROCÉDÉ POUR SÉPARER DES CORPS CYLINDRIQUES

(30) Priorität: 17.07.2008 CH 11092008
(43) Veröffentlichungstag der Anmeldung: 06.04.2011
(73) Patentinhaber: M. Tanner AG, 8308 Illnau (CH)
(72) Erfinder: TANNER, Marcel, CH-8303 Bassersdorf (CH)
(74) Vertreter: Frei Patent Attorneys
(86) Internationale Anmeldenummer: PCT/CH2009/000255
(87) Internationale Veröffentlichungsnummer: WO 2010/006461

(56) Entgegenhaltungen:
- WO-A-00/23254
- FR-A- 2 556 273
- GB-A- 2 020 614
- JP-A- 2000 168 945
- US-A- 4 440 286
- US-B1- 7 322 458

## Beschreibung

Die Erfindung betrifft das Gebiet der Vereinzelung von Schüttgut, insbesondere eine Vorrichtung und ein Verfahren zum Vereinzeln von zylindrischen Körpern gemäss dem Oberbegriff der entsprechenden unabhängigen Patentansprüche.

### STAND DER TECHNIK

Üblicherweise werden Vorformlinge von PET-Flaschen, auch Preforms genannt, als Stückgut ungeordnet in grossen Behältern angeliefert und über eine Beschickungseinrichtung zu einer Vereinzelungseinrichtung geführt. Die Vereinzelungseinrichtung richtet die Vorformlinge auf und bildet eine Einzelreihe der Vorformlinge, welche die Vereinzelungseinrichtung beispielsweise über eine schräg nach unten gerichteten Rutsche, auch Ablaufschiene genannt, verlässt. Von da gelangen die Vorformlinge zu Prüf- und Fördereinrichtungen und schliesslich zu einer Streckblasmaschine, wo ihr zylindrischer Körper zu einer gewünschten Flaschenform aufgeblasen wird. Die Vorformlinge weisen typischerweise an einem offenen Ende einen Gewindekopf mit einem Gewindestutzen und einem Kragen oder Tragring auf, welcher einen grösseren Durchmesser als der übrige Zylinderteil des Vorformlings aufweist.

DE 601 18 772 T2 beschreibt eine Vereinzelungseinrichtung, welche als Rollenförderer ausgebildet ist. Dieser weist zwei beabstandet zueinander angeordnete Rollen auf, welche am trichterförmigen Boden eines langgestreckten Behälters angeordnet sind. Die Rollen rotieren um ihre Längsachsen und bilden eine Förderbahn, die üblicherweise mit einem geringen Gefälle verläuft. Die Vorformlinge werden in einer Einzelreihe hintereinander geführt durch diesen Rollenförderer transportiert. Hierzu liegen sie mit ihren Kragen auf den Rollen auf, wobei aufgrund der Schwerkraft ihre Körper mit dem Zylinderteil im Spalt zwischen den Rollen frei hinunterhängen. Vorformlinge, welche nicht die korrekte Position einnehmen und deshalb über eine vorgegebene Höhe hinausragen, werden mittels eines rotierenden Kickerrades oder Rückstaurades aus der Förderbahn weggeschleudert und gelangen in einen hinteren Bereich des Rollenförderers oder in einen Überlaufbereich, von wo sie wieder in einen Einfüllbehälter des Rollenförderers gefördert werden.

Aufgrund der hohen Förderleistung solcher Vereinzelungseinrichtungen ist eine sehr hohe Zuverlässigkeit und Störungsfreiheit gefordert, um Stillstandszeiten der nachfolgenden Anlage mit entsprechenden Folgekosten zu vermeiden. GB 2 020 614 A1 offenbart eine Vereihzelungseihrichtung und ein Verfahren gemäß dem Oberbegriff der Ansprüche 1 und 18. Bei bekannten Einrichtungen können beispielsweise Vorformlinge, welche mit dem Kragen auf einem Kragen eines benachbarten Vorformlings aufliegen oder Vorformlinge, welche horizontal auf dem Spalt zwischen den Rollen liegen, nicht erfasst und ausgeworfen werden. Dadurch entstehen in den nachfolgenden Bereichen der Anlage Störungen und folglich Betriebsunterbrüche. Es zeigt sich, dass die Zuverlässigkeit bekannter Vereinzelungseinrichtungen den hohen Anforderungen nicht gerecht wird, und eine weitere Verbesserung der Störsicherheit erforderlich ist.

### DARSTELLUNG DER ERFINDUNG

Es ist deshalb Aufgabe der Erfindung, eine Vereinzelungseinrichtung und ein Verfahren der eingangs genannten Art zu schaffen, welche die oben genannten Nachteile behebt. Insbesondere soll die Erfindung gewährleisten, dass bis anhin nicht feststellbare Lagefehler von Vorformlingen mit hoher Zuverlässigkeit erkannt und automatisch behoben werden.

Diese Aufgabe lösen eine Vereinzelungseinrichtung für zylindrische Körper und ein Verfahren mit den Merkmalen der entsprechenden unabhängigen Patentansprüche.

Die Vereinzelungseinrichtung ist auf zylindrische Körper, wie Vorformlinge für Hohlkörper ausgelegt, welche an einem ersten Ende mindestens eine Auskragung oder einen Tragring aufweisen und an einem zweiten Ende einen Durchmesser aufweisen, der geringer als der Durchmesser der Auskragung ist. Die Vereinzelungseinrichtung weist ein Paar parallel angeordneter Führungselemente auf, zwischen welchen die zylindrischen Körper aufrichtbar sind, indem die zylindrischen Körper jeweils mit der Auskragung an den Führungselementen hängen, also mit dem zweiten Ende nach unten zeigen. Die zylindrischen Körper bilden eine Einzelreihe entlang der Führungselemente und sind so zu einem Ablauf zum Weiterbefördern der zylindrischen Körper führbar.

Dabei weist die Vereinzelungseinrichtung eine über der Einzelreihe angeordnete Höhenführung auf, wobei sich ein Abstand zwischen der Höhenführung und den zylindrischen Körpern, in Förderrichtung gesehen, bis zu einem vorgegebenen Abstand zu den Führungselementen verringert, wodurch vertikal vorstehende zylindrische Körper, indem sie in Förderrichtung gefördert werden, durch die Höhenführung nach unten gedrückt oder geführt werden. Dabei ist die Höhenführung mittels einer Hubvorrichtung nach Massgabe eines Auslösesignals kurzzeitig anhebbar.

Dadurch wird es möglich, zylindrische Körper, die sich gegen respektive unter die Höhenführung verklemmt haben, vorübergehend zu befreien. Da die Verklemmung, wie sich zeigt, oftmals davon herrührt, dass ein Vorformling mit seinem Kragen auf dem Kragen eines benachbarten Vorformlings aufliegt, kann der aufliegende Vorformling nach dem Lösen der Verklemmung in die korrekte Lage abrutschen.

Der Abstand zwischen der Höhenführung und den zylindrischen Körpern ist zweckmässigerweise nach Massgabe der Höhe der Körper einstellbar, d.h. entsprechend der Höhe, mit der die zylindrischen Körper, wenn sie ordnungsgemäss mit ihrem Kragen an den Führungselementen hängen, vertikal über die Führungselemente hinausragen.

In einer bevorzugten Ausführungsform der Erfindung sind die Führungselemente Rollen, insbesondere gegenläufig rotierende Rollen, und werden die zylindrischen Körper in einem Zwischenraum zwischen den Rollen gefördert. Die Vereinzelungseinrichtung basiert also auf dem Prinzip eines Rollenförderers. Die Erfindung lässt sich grundsätzlich auch mit anders gearteten Führungselementen, beispielsweise mit Schienen und beispielsweise in einem Rüttelförderer, implementieren.

Das Anheben der Höhenführung kann durch eine Parallelbewegung oder aber auch durch eine Kippbewegung erfolgen. Das Anheben kann beispielsweise durch pneumatisch oder elektromagnetisch wirkende Aktuatoren geschehen.

In einer weiteren bevorzugten Ausführungsform der Erfindung weist die Vereinzelungseinrichtung eine Verklemmungs-Detektionseinrichtung auf, welche dazu ausgebildet ist, ein Anstehen eines zylindrischen Körpers an der Höhenführung zu detektieren und darauf das Auslösesignal zum Anheben der Höhenführung zu erzeugen. Dadurch wird es möglich, die Höhenführung beim Vorliegen einer Verklemmung gezielt anzuheben.

Vorzugsweise ist diese Verklemmungs-Detektionseinrichtung dazu ausgebildet, zu erfassen, ob zylindrische Körper in Förderrichtung vor der Höhenführung anstehen und ob in einem Bereich nach der Höhenführung keine zylindrischen Körper vorliegen, und wenn diese beiden Bedingungen erfüllt sind, das Auslösesignal zu erzeugen. Die Verklemmungs-Detektionseinrichtung detektiert also einen Stau in der Förderbahn der Vorformlinge im Bereich der Höhenführung, und damit implizite auch eine Verklemmung gegen die Höhenführung.

Die Führungselemente, der Ablauf und allfällige weitere Elemente, welche den Verlauf der Einzelreihe von zylindrischen Körpern bestimmen, werden im Folgenden zusammenfassend als *Förderbahn* bezeichnet.

In einer weiteren bevorzugten Ausführungsform der Erfindung weist die Verklemmungs-Detektionseinrichtung einen ersten Präsenzdetektor, insbesondere eine erste Lichtschranke, auf, welche in einem Bereich einer Förderbahn der zylindrischen Körper vor der Höhenführung das Vorhandensein von zylindrischen Körpern detektiert, und einen zweiten Präsenzdetektor, insbesondere eine zweite Lichtschranke, welche in einem Bereich der Förderbahn der zylindrischen Körper *nach* der Höhenführung das Vorhandensein von zylindrischen Körpern detektiert. Gemäss dieser Ausführungsform wird also ein Stau detektiert, wenn die zylindrischen Körper vor der Höhenführung anliegen und nach der Höhenführung keine anliegen. Damit ist eine Staudetektion mit einfachen Mitteln möglich.

In einer weiteren bevorzugten Ausführungsform der Erfindung ist einer oder sind beide Präsenzdetektoren eine Lichtschranke, und ist diese bezüglich der Förderbahn jeweils so angeordnet, dass der Strahl der Lichtschranke, wenn die zylindrischen Körper auf der Förderbahn unmittelbar aufeinander folgen, jeweils durch mehrere der zylindrischen Körper führt. Der Strahl der Lichtschranke ist vorzugsweise bezüglich der Förderbahn respektive der darin verlaufenden Einzelreihe von zylindrischen Körpern geneigt, d.h. sie verläuft in einem Winkel von weniger als 90°, vorzugsweise weniger als 70°, zur Förderrichtung der zylindrischen Körper. Die Lichtschranke kann eine Durchlichtlichtschranke (Einweg-Lichtschranke) oder eine Reflexionslichtschranke sein.

Grundsätzlich sind anstelle von Lichtschranken auch andere Sensoren oder andere Anordnungen von Sensoren einsetzbar, welche das Vorhandensein einer Gruppe der zylindrischen Körper in einem vorgegebenen Bereich der Förderbahn detektieren. Beispielsweise sind Einzelne oder Gruppen von Lichtschranken (Lichtgitter oder Lichtvorhänge) oder Zeilensensoren oder Kameras oder Reflexions-Lichttaster oder Ultraschallsensoren oder mechanische Fühler denkbar, die beispielsweise seitlich oder von oben respektive unten auf die Förderbahn und die Einzelreihe der geförderten Körper ausgerichtet sind.

In einer weiteren bevorzugten Ausführungsform der Erfindung ist die Höhenführung im Bereich eines Rückstaurades (oder Kickerrades) angeordnet, und weisen Schaufeln des rotierenden Rückstaurades jeweils eine Ausnehmung auf, welche mit der Form der Höhenführung korrespondiert. Dabei ragen die Schaufeln in einem Bereich, in welchem die Höhenführung noch nicht wirksam ist, nach unten über die Höhenführung hinaus. Damit ist eine besonders platzsparende Kombination des Rückstaurades mit der Höhenführung möglich. Grundsätzlich ist es aber auch möglich, das Rückstaurad vor der Höhenführung entlang der Förderbahn anzuordnen. Diese Kombination hat den Vorteil, dass weiter hervor ragende und lose aufliegende zylindrische Körper durch das Rückstaurad erfasst und entgegen der Förderrichtung nach hinten geworfen werden, und weniger weit hervor ragende zylindrische Körper zwar nicht durch das Rückstaurad, aber anschliessend durch die Höhenführung erfasst werden. In Förderrichtung gesehen ist also zuerst das Rückstaurad und dann die Höhenführung wirksam. In beiden Fällen ragen die Schaufeln des Rückstaurades an der tiefsten Stelle vorzugsweise weiter nachunten als die Höhenführung. Obschon damit theoretisch das Rückstaurad alle zylindrischen Körper erfassen sollte, die an der Höhenführung anstehen würden, zeigt die Praxis doch, dass sich auch dann ab und zu die zylindrischen Körper an der Höhenführung verklemmen.

In einer weiteren bevorzugten Ausführungsform der Erfindung weist die Vereinzelungseinrichtung eine Auswurfvorrichtung auf, welche zylindrische Körper, die zwar mit der Auskragung an den Führungselementen hängen, aber deren zweites Ende nicht nach unten hängt, detektiert und aus der Einzelreihe auswirft.

Eine solche Fehllage kann beispielsweise auftreten, wenn das untere Ende der zylindrischen Körper aufgrund von Fabrikationsfehlern oder Toleranzen zu breit ist und dadurch an den Führungselementen hängen bleibt, anstatt sich nach unten in die vertikale Lage zu drehen. Eine andere Ursache kann sein, dass zwei Vorformlinge ineinander stecken und so gemeinsam in einer horizontalen Lage zwischen den Führungselementen bleiben. In beiden Fällen wird erfasst, dass ein Vorformling vorhanden ist, aber nicht korrekt orientiert ist, und darauf das Auswerfen ausgelöst.

Vorzugsweise weist die Auswurfvorrichtung eine Parallellage-Detektionseinrichtung mit einem Präsenzdetektor und einem Lagedetektor auf. Dabei bestimmt der Präsenzdetektor das Vorhandensein eines zylindrischen Körpers zwischen den Führungselementen, und bestimmt der Lagedetektor die Orientierung des zylindrischen Körpers. Die Parallellage-Detektionseinrichtung löst beim Vorhandensein eines zylindrischen Körpers, der eine falsche Orientierung aufweist, also im Wesentlichen parallel zu den Führungselementen liegt, das Auswerfen des zylindrischen Körpers aus.

Vorzugsweise ist der Präsenzdetektor eine Lichtschranke, insbesondere eine Lichtschranke, deren Strahl von oben nach unten oder umgekehrt durch die Einzelreihe der zylindrischen Körper führt.

In einer bevorzugten Ausführungsform der Erfindung detektiert der Lagedetektor ein Vorhandensein der zweiten Enden der zylindrischen Körper in einem Bereich unter den Führungselementen. Damit ist eine Detektion der Lage mit einfachen Mitteln möglich. Vorzugsweise weist der Lagedetektor einen als Distanzmesser oder Näherungsschalter ausgebildeten Ultraschallsensor auf, welcher die Distanz vom Ultraschallsensor zur erwarteten Position der zweiten Enden der zylindrischen Körper misst, und falls diese Distanz einen vorgegebenen Wert überschreitet, die falsche Orientierung des entsprechenden zylindrischen Körpers signalisiert.

Sowohl zur Präsenz- wie auch zur Lagedetektion sind alternativ auch einzelne oder Gruppen von Lichtschranken (Lichtgitter oder Lichtvorhänge) oder Zeilensensoren oder Kameras oder Reflexions-Lichttaster oder Ultraschalldistanzmesser oder mechanische Fühler denkbar, die beispielsweise seitlich oder von oben respektive unten auf die Förderbahn und die Einzelreihe der geförderten Körper ausgerichtet sind.

Vorzugsweise weist die Auswurfvorrichtung ferner ein bewegliches Auswurfsmittel auf, welches zum Auswerfen eines falsch orientierten zylindrischen Körpers von unten her zwischen die Führungselemente hindurch fährt und so diesen zylindrischen Körper anhebt und auswirft. Zudem kann die Auswurfvorrichtung eine zugeordnete Ausblasvorrichtung zum seitlichen Wegblasen des zylindrischen Körpers nach dem Anheben aufweisen.

In einer weiteren bevorzugten Ausführungsform der Erfindung weist die Vereinzelungseinrichtung ferner eine Auflagedetektionseinrichtung auf, welche erfasst, ob ein zylindrischer Körper auf den in der Einzelreihe geförderten zylindrischen Körper aufliegt oder seitlich anliegt. Wenn dies der Fall ist, wird eine zugeordnete Ausblasvorrichtung zum seitlichen Wegblasen eines zylindrischen Körpers von den Führungselementen respektive der Einzelreihe aktiviert.

Vorzugsweise weist die Auflagedetektionseinrichtung eine Lichtschranke auf, deren Strahl im Wesentlichen horizontal und im Winkel, vorzugsweise im Wesentlichen senkrecht, zum Verlauf der Führungselemente respektive der Einzelreihe verläuft. Die Höhe des Strahls ist so eingestellt, dass die Lichtschranke bei über einander aufliegenden zylindrischen Körpern anspricht. Falls also die zylindrischen Körper in der Normallage sind, verläuft der Strahl oberhalb der zylindrischen Körper, und die Lichtschranke spricht nicht an. Die Lichtschranke kann an einer Stelle der Förderbahn angeordnet sein, an welcher auch das Ausblasen stattfindet. Dann wird das Ausblasen ohne wesentliche Verzögerung nach dem Ansprechen der Lichtschranke ausgelöst. Falls das Ausblasen erst an einer späteren Stelle geschieht, wird es entsprechend der Fördergeschwindigkeit erst eine bestimmte Zeit nach dem Ansprechen der Lichtschranke ausgelöst.

In einer weiteren bevorzugten Ausführungsform der Erfindung ist die Ausblasvorrichtung, welche der Auswurfvorrichtung zugeordnet ist, mit der Ausblasvorrichtung, welche der Auflagedetektionseinrichtung zugeordnet ist, identisch. Dadurch ergibt sich eine Vereinfachung der Gesamtvorrichtung bei kombinierter erhöhter Funktionalität.

In einer weiteren bevorzugten Ausführungsform der Erfindung weist die Vereinzelungsvorrichtung sowohl die Auswurfvorrichtung als auch ein Kickerrad und eine verstellbare Höhenführung auf. Optional kann zudem auch eine seitliche Ausblasvorrichtung zur Elimination von horizontal aufliegenden Körpern vorliegen. Mit dieser Kombination von Elementen können verschieden geartete Fehllagen in komplementärer Weise erkannt und behoben werden, wodurch sich insgesamt eine sehr hohe Zuverlässigkeit ergibt.

In einer weiteren bevorzugten Ausführungsform der Erfindung verwenden die Auswurfvorrichtung und die verstellbare Höhenführung mindestens einen Sensor gemeinsam. So kann beispielsweise eine Lichtschranke, welche als Präsenzdetektor der Auswurfvorrichtung wirkt, auch zur Detektion eines Staus vor der Höhenführung verwendet werden. Unter Umständen wird bei der Auswertung der Sensorsignale für die Höhenführung die Transportzeit zwischen Auswurfvorrichtung und Höhenführung berücksichtigt, und ob die Auswurfvorrichtung kürzlich ausgelöst wurde.

Die oben beschriebenen Vorrichtungen eignen sich grundsätzlich nicht nur für das Ausrichten von Vorformlingen, sondern von allen Stückgütern, welche einen Stütz- oder Tragring oder eine Auflagefläche oder einen Kragen aufweisen.

Weitere bevorzugte Ausführungsformen gehen aus den abhängigen Patentansprüchen hervor. Dabei sind Merkmale der Verfahrensansprüche sinngemäss mit jenen der Vorrichtungsansprüche kombinierbar und umgekehrt.

### KURZE BESCHREIBUNG DER ZEICHNUNGEN

Im Folgenden wird der Erfindungsgegenstand anhand von bevorzugten Ausführungsbeispielen, welche in den beiliegenden Zeichnungen dargestellt sind, näher erläutert. Es zeigen jeweils schematisch:
- Fig. 1: einen Überblick über eine Einrichtung zum Beschicken einer automatischen Produktionsstrasse,
- Fig. 2: eine Seitenansicht einer anhebbaren Höhenführung in einem Rollenförderer,
- Fig. 3: eine Ansicht der Höhenführung mit Blick in Förderrichtung,
- Fig. 4: eine Ansicht einer solchen Höhenführung in Kombination mit einem Rückstaurad,
- Fig. 5: eine perspektivische Ansicht der Anordnung von Höhenführung und Rückstaurad,
- Fig. 6: eine Seitenansicht einer Auswurfvorrichtung in einem Rollenförderer,
- Fig. 7: eine perspektivische Ansicht der Auswurfvorrichtung beim Auswerfen eines geförderten Körpers,
- Fig. 8: eine Ansicht einer Ausblasvorrichtung zum Entfernen aufliegender Vorformlinge,
- Fig. 9: eine Ansicht der Anordnung der Figur 8 von unten, und
- Fig. 10: eine Seitenansicht eines Rollenförderers mit einer anhebbaren Höhenführung und einer Auswurfvorrichtung mit einer Ausblasvorrichtung.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### WEGE ZUR AUSFÜHRUNG DER ERFINDUNG

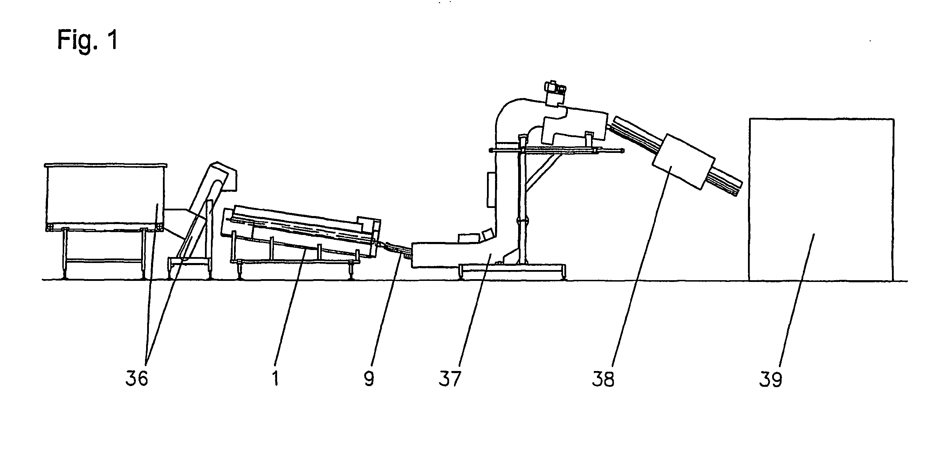

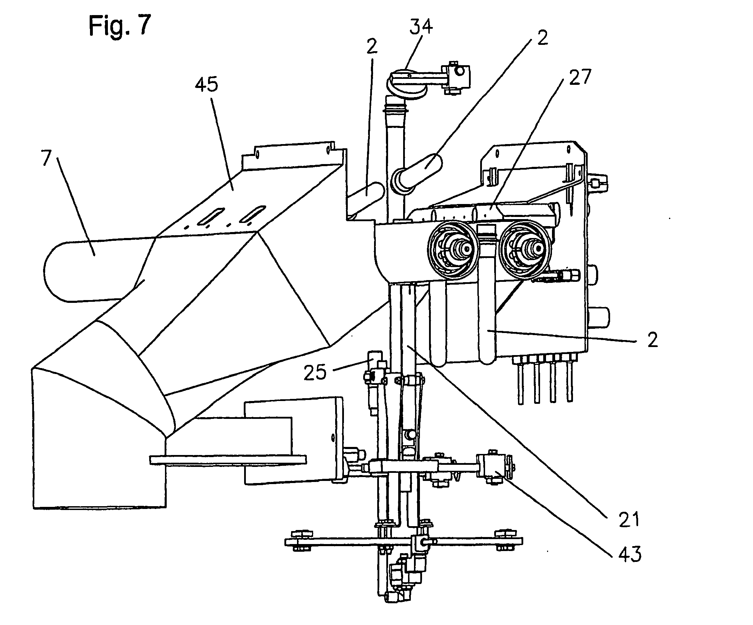

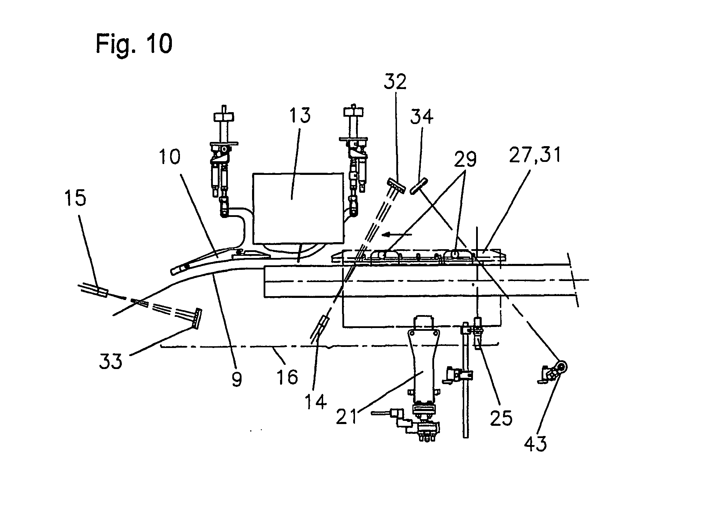

Fig. 1 zeigt einen Überblick über eine Einrichtung zum Beschicken einer automatischen Produktionsstrasse. Darin werden beispielsweise Vorformlinge 2 aus einer Beschickungseinrichtung 36 mit einem Schüttgutbehälter und einem Steigförderer zu einer Vereinzelungseinrichtung 1 geführt. In der Vereinzelungseinrichtung 1 werden die Vorformlinge 2 aufgerichtet und in eine Einzelreihe 8 gebracht. Diese Einzelreihe 8 der Vorformlinge 2 verlässt die Vereinzelungseinrichtung 1 über eine Ablaufschiene 9 und gelangt in eine Fördereinrichtung 37 mit Mess- und Kontrolleinrichtungen, und wird anschliessend über eine Übernahmeeinrichtung 38 einer Formgebungseinrichtung 39, beispielsweise einer automatischen Streckblasmaschine zugeführt. Im Folgenden ist in diesem Zusammenhang von Vor formlingen 2 die Rede, es versteht sich aber, dass die Erfindung in analoger Weise auch zur Vereinzelung und zum Ausrichten von anderen im wesentlichen zylindrischen Körpern, welche einen Kragen oder einen Tragring aufweisen, verwendet werden kann. Die nachfolgend beschriebenen Komponenten sind am Endteil der Vereinzelungseinrichtung 1, im Übergang zur Ablaufschiene 9 angeordnet.

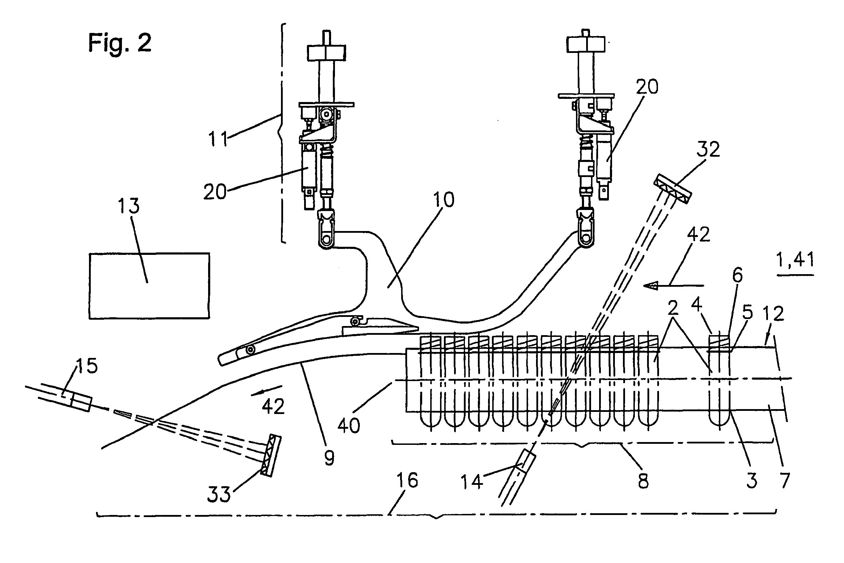

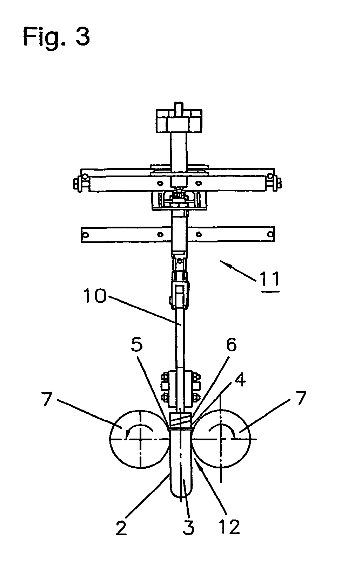

Fig. 2 zeigt eine Seitenansicht einer anhebbaren Höhenführung 10 in einer Vereinzelungseinrichtung 1, und Fig. 3 eine Ansicht mit Blick in Förderrichtung 42.
   Diese abhebbare Höhenführung 10 ist vor dem Austrittsende 40 der Vereinzelungseinrichtung 1 angeordnet. Die Vereinzelungseinrichtung 1 weist einen, an sich bekannten Rollenförderer 41 mit zwei parallelen Rollen 7 auf. Die Höhenführung 10 ist an einer Hubvorrichtung 11 befestigt und durch Betätigung von Hubzylindern 20, welche gelenkig mit der Höhenführung 10 verbunden sind, anhebbar. Die Höhenführung 10 ist oberhalb einer Förderbahn 16 angeordnet, in welcher die Vorformlinge 2 in einer Einzelreihe 8 gefördert werden. Die Einzelreihe 8 wird in bekannter Weise in einem Zwischenraum 12 zwischen zwei gegenläufig rotierenden Walzen oder Rollen 7 gebildet. Dazu weisen die Vorformlinge 2 eine im wesentlichen zylindrische Form auf, mit einem Endbereich 4 mit einem Kragen 5 und einem Gewindestutzen 6 an einem ersten Ende, und einem Zylinderteil 3 am zweiten Ende. Der Zylinderteil 3 weist einen kleineren Durchmesser als der Kragen 5 auf, so dass der Vorformling 2 zwischen den Führungsrollen 7 am Kragen 5 hängen bleibt.
   Die Einzelreihe 8 wird unter der Höhenführung 10 hindurch zu einer Ablaufschiene 9 gefördert. In einem Bereich - in Förderrichtung 42 betrachtet - vor der Höhenführung 10 ist eine erste Lichtschranke 14 mit einem ersten Reflektor 32 angeordnet, so dass sie anspricht, wenn sich einer oder mehrere der Vorformlinge 2 in diesem Bereich der Förderbahn 16 befinden. In einem Bereich nach der Höhenführung 10, also beispielsweise beim Ablauf 9, ist eine zweite Lichtschranke 15 mit einem zweiten Reflektor 33 angeordnet, welche anspricht, wenn sich einer oder mehrere der Vorformlinge 2 in diesem Bereich der Förderbahn 16 befinden. Eine Verklemmungs-Detektionseinrichtung 13 erfasst über (nicht eingezeichnet) Signalverbindungen den Zustand der beiden Lichtschranken und steuert dem entsprechend über (nicht eingezeichnet) weitere Steuerverbindungen die Hubzylinder 20 zum Anheben der Höhenführung 10 an.
   Dies geschieht in folgender Weise: Wenn, wie in der Fig. 2 eingezeichnet, Vorformlinge 2 in der Einzelreihe 8 nahe aufeinander folgen und mit den Kragen 5 aufeinander aufliegen, sind die derart aufliegenden Vorformlinge 2 zu hoch und kommen bei entsprechender Einstellung der Höhe der Höhenführung 10, mit dieser in Kontakt. Dadurch, oder auch aus anderen Gründen, können sich die Vor formlinge 2 gegen die Höhenführung 10 verklemmen. Dies führt dazu, dass keine Vorformlinge 2 mehr an der Höhenführung 10 vorbeibefördert werden, und dass die zweite Lichtschranke 15 im Bereich des Ablaufs 9 nicht mehr anspricht. Die erste Lichtschranke 14 spricht wegen den sich vor der Höhenführung 10 anstauenden Vorformlinge 2 an. Wenn dieser Zustand eintritt, löst die Verklemmungs-Detektionseinrichtung 13 das Anheben der Höhenführung 10 aus. Dadurch lösen sich die verklemmten Vorformlinge 2 voneinander und von der Höhenführung 10 und rutschen durch den Ablauf 9. Das Ablösen der Vorformlinge 2 voneinander und das Abrutschen ihrer Kragen 5 aneinander wird dadurch begünstigt, dass die Vorformlinge 2 am zunehmend geneigten Ablauf 9 beschleunigt werden und keine Vorformlinge 2 im Ablauf 9 sind, welche diese Bewegung und Trennung der Vorformlinge 2 bremsen. Die Höhenführung 10 wird rund eine halbe bis anderthalb Sekunden lang angehoben, typischerweise rund eine Sekunde, und anschliessend wieder abgesenkt.

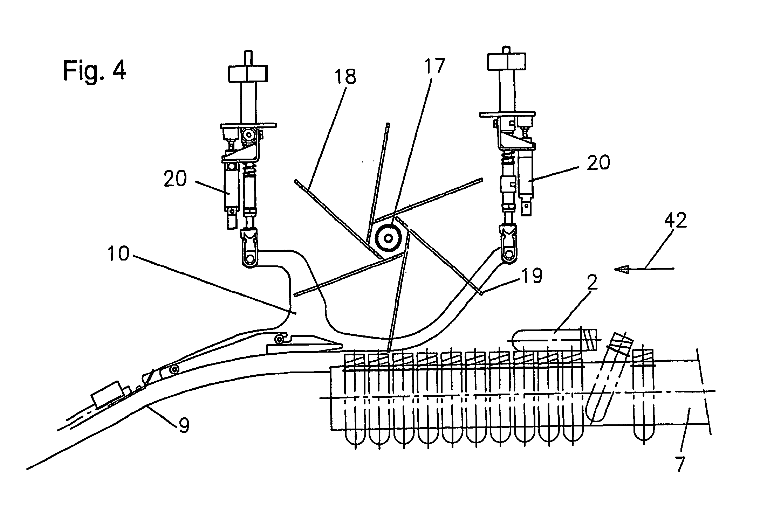

Fig. 4 zeigt eine Ansicht einer solchen Höhenführung 10 in Kombination mit einem Rückstaurad oder Kickerrad 17. Das Rückstaurad 17 weist Paddel oder Schaufeln 18 auf, welche jeweils mit einer schlitzartigen Ausnehmung 19 versehen sind, in welcher die Höhenführung 10 verläuft. Die Spitzen der Schaufeln 18 reichen vorzugsweise mindestens so tief wie die Höhenführung 10 an ihrer tiefsten Stelle, und in einem Bereich (in Förderrichtung gesehen) vor der Höhenführung ragen die Spitzen weiter über die Höhenführung 10 hinaus. Das Rückstaurad 17 erfasst dadurch also zu weit überstehende Vorformlinge 2, welche in den Bereich der Schaufeln 18 ragen oder solche welche aufeinander liegen und wirft diese wieder nach hinten. Vorformlinge 2 welche nicht vom Rückstaurad 17 erfasst werden, können immer noch zu einer Verklemmung mit der Höhenführung 10 führen, welche wie beschrieben durch Anheben der Höhenführung 10 behoben wird. Die Höhenführung 10 und das Rückstaurad 17 können gemeinsam oder jeweils für sich alleine in der Höhe verstellbar sein, wodurch eine Anpassung an unterschiedliche Geometrien der Vorformlinge 2 möglich ist.

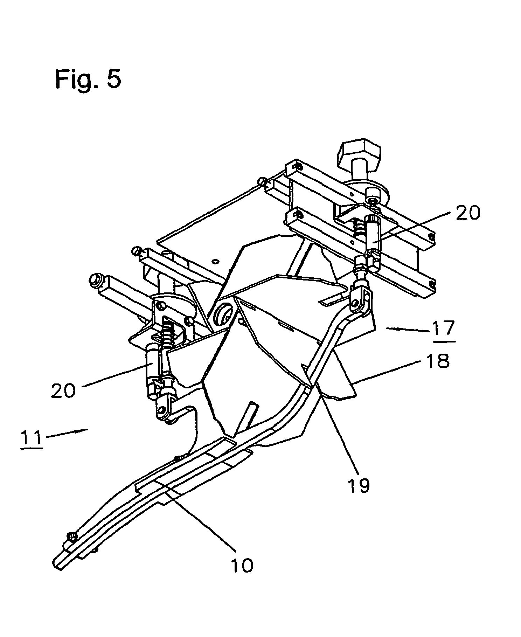

Fig. 5 zeigt eine perspektivische Ansicht der gegenseitigen Anordnung von Höhenführung 10 und Rückstaurad 17, in welcher die Ausnehmungen 19 und der Verlauf der Höhenführung 10 in den Ausnehmungen 19 der rotierenden Schaufeln 18 erkennbar ist. Die Ausnehmungen 19 sind tief genug, so dass auch bei angehobener Höhenführung 10 diese nicht mit den Schaufeln 18 kollidiert. Alternativ kann auch das Rückstaurad 17 zusammen mit der Höhenführung 10 kurzzeitig angehoben werden.

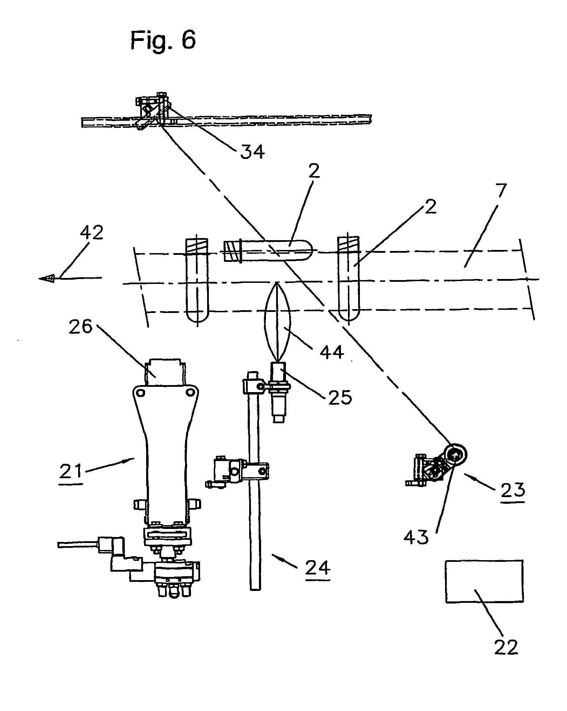

Fig. 6 zeigt eine Seitenansicht einer Auswurfvorrichtung 21 in einem Rollenförderer. Diese Auswurfeinrichtung 21 ist im beschriebenen Beispiel, in Förderrichtung 42 gesehen, vor der Höhenführung 10 angeordnet Die Auswurfvorrichtung 21 weist ein Auswurfsmittel 26 auf, in diesem Fall ein vertikal beweglicher Körper, welcher von unten her vertikal zwischen die Führungsrollen 7 bewegbar ist und bei einer solchen Bewegung einen zwischen den Führungsrollen 7 befindlichen und falsch positionierten Vorformling 2 nach oben stösst. Die Auswurfvorrichtung 21 weist ferner eine Parallellage-Detektionseinrichtung 22 auf, welche zum Auswerten von Signalen eines Präsenzdetektors 23 und eines Lagedetektors 24 eingerichtet ist. Der Präsenzdetektor 23 ermittelt, ob an einer vorgegebenen Messstelle des Rollenförderers 41 bzw. der Förderbahn 16 ein Vorformling 2 vorliegt. Dazu ist der Präsenzdetektor 23 beispielsweise eine Lichtschranke 43 mit einem Reflektor 34, welche so angeordnet sind, dass der Lichtstrahl durch den Zwischenraum 12 zwischen den Rollen 7 der Förderbahn 16 gereichtet ist und anspricht, wenn ein Vorformling 2 an der Messstelle vorliegt. Der Lagedetektor 24 ermittelt gleichzeitig, ob dieser Vorformling 2 auch vertikal hängt Dazu weist er vorzugsweise einen Ultraschallsensor 25 auf, welcher eine Distanz zum erwarteten unteren Ende eines Vorformlings 2 an der Messstelle ermittelt. Ein Erfassungsbereich 44, in welchem der Ultraschallsensor 25 anspricht, ist in der Figur schematisch eingezeichnet. Die Parallellage-Detektionseinrichtung 22 löst, falls diese Distanz zu gross ist und gleichzeitig der Präsenzdetektor 23 das Vorhandensein eines Vorformlings 2 meldet, automatisch eine Betätigung des Auswurfsmittels 26 und dadurch das Auswerfen des falsch liegenden Vorformlings 2 aus. Typischerweise ist, in Förderrichtung gesehen, der Ort, an welchem die Parallellage kontrolliert wird, dem Ort, an welchem das Auswurfsmittel 26 wirkt, vorgelagert. Zwischen dem Zeitpunkt der Detektion eines falsch respektive horizontal liegenden Vorformlings 2 und dem Zeitpunkt des Auswerfens wird deshalb eine Verzögerung eingeschaltet. Diese richtet sich nach der Fördergeschwindigkeit (je nach Grösse der Vorformlinge z.B. rund 15'000 bis 80'000 Stück/Stunde) und beträgt beispielsweise rund eine halbe Sekunde.
   Das Auswurfsmittel 26 kann einen asymmetrisch gestalteten Auswurfstössel auf weisen, welcher den Vorformling 2 in eine bevorzugte Richtung seitlich oder nach hinten wegstösst. Alternativ oder zusätzlich kann die Auswurfvorrichtung 21 eine Ausblasvorrichtung 27 (siehe Fig. 7) aufweisen, welche zusammen mit dem Auswurfsmittel 26 aktiviert wird und den Vorformling 2 seitlich wegbläst.
Fig. 7 zeigt eine perspektivische Ansicht der Auswurfvorrichtung 21 beim Auswerfen eines geförderten Körpers bzw. Vorformlings 2 und eine mögliche Lage der optionalen Ausblasvorrichtung 27. Der Ausblasvorrichtung 27 gegenüber ist eine Auffangvorrichtung 45 eingezeichnet. Diese fängt die weggeblasenen Vorformlinge 2 auf, welche anschliessend zum Anfang der Vereinzelungseinrichtung 1 zurückgeführt werden.

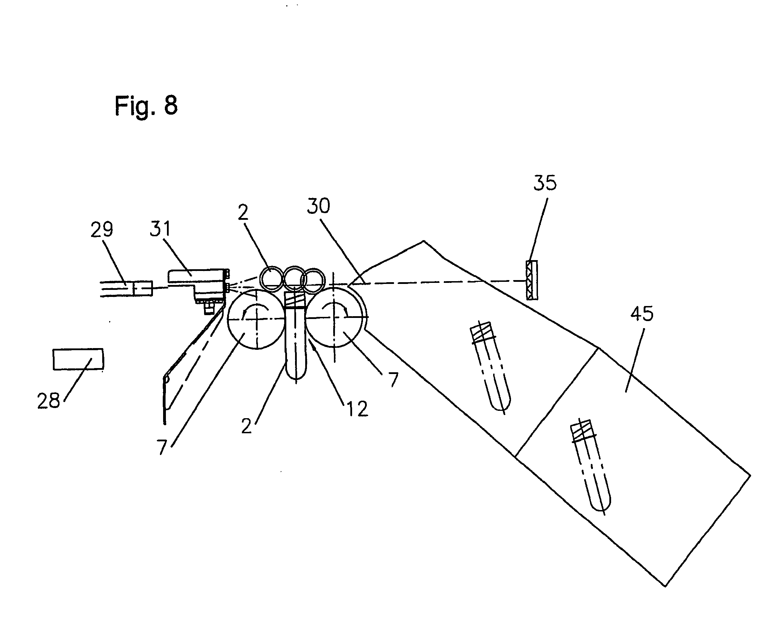

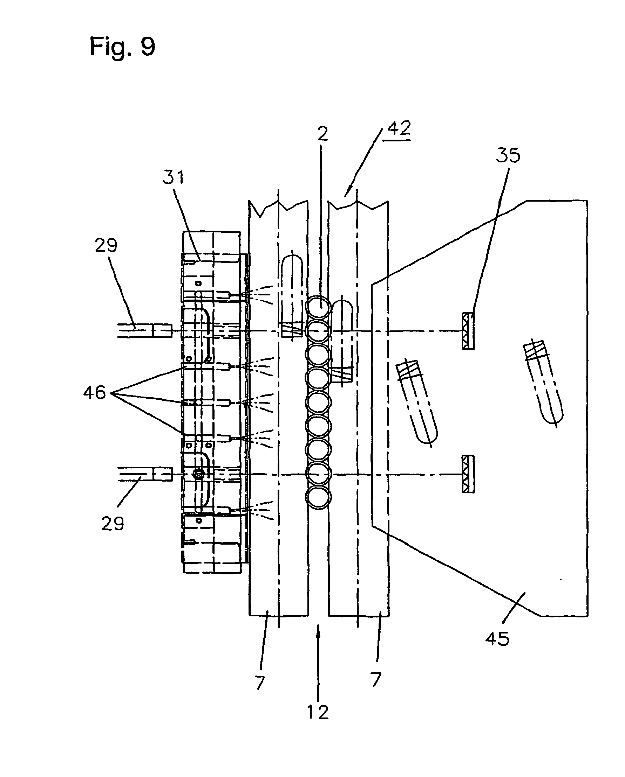

Fig. 8 zeigt eine Ansicht einer Auflagedetektionseinrichtung 28 mit einer Ausblasvorrichtung 31 zum Entfernen von horizontal und/oder schräg aufliegender Vorformlinge 2. Fig. 9 zeigt eine Ansicht dieser Anordnung von unten her. Die Auflagedetektionseinrichtung 28 weist eine Lichtschranke 29 mit einem Reflektor 35 auf. Der Strahl 30 der Lichtschranke 29 verläuft ein wenig oberhalb der korrekten Position der Vorformlinge 2, so dass er nicht anspricht, wenn die ausgerichteten Vorformling 2 in der normalen Höhe zwischen den Führungsrollen 7 liegen. Falls eine oder mehrere der Vorformlinge 2 wie gezeichnet auf den ausgerichteten Vorformlingen 2 liegen, unterbrechen sie den Strahl 30. Dadurch löst die Auflagedetektionseinrichtung 28 automatisch einen Luftstoss durch die Ausblasvorrichtung 31 aus, welche die Vorformlinge 2 seitlich wegbläst. In einer bevorzugten Ausführungsform der Erfindung liegen mehrere, entlang der Förderrichtung 42 verteilte Luftdüsen 46 als Teil der Ausblasvorrichtung 31 vor, so dass die Vorformlinge 2 sicher durch den Luftstoss erfasst werden. In der gezeigten bevorzugten Ausführungsform der Erfindung sind zudem zwei Lichtschranken 29, jeweils mit zugeordneten Luftdüsen 46, in Förderrichtung 42 nacheinander angeordnet. Falls nach dem Ausblasen anhand des Signals der ersten Lichtschranke 29 noch Vorformlinge 2 aufliegen, werden diese durch die zweite Lichtschranke 29 erfasst. Dadurch wird die Zuverlässigkeit des Systems weiter erhöht.
   Grundsätzlich sind die Auswurfvorrichtung 21 mit dem Auswurfsmittel 26 und die Auflagedetektionseinrichtung 28 mit der Ausblasvorrichtung 31 separat realisierbar. In der in den Figuren 7 und 10 gezeigten bevorzugten Ausführungsform der Erfindung sind sie aber miteinander kombiniert. Es ist dabei die Ausblasvorrichtung 27 der Auswurfvorrichtung 21 identisch mit der Ausblasvorrichtung 31 der Auflagedetektionseinrichtung 28.
Fig. 10 zeigt eine Seitenansicht einer Ausführungsform der Erfindung mit sowohl der anhebbaren Höhenführung 10, als auch der Auswurfvorrichtung 21 und der damit kombinierten Auflagedetektionseinrichtung mit den Lichtschranken 29. In dieser Darstellung sind die Höhenführung 10 mit dem Kickerrad 17, die Auswurfvorrichtung 21 mit der zugehörigen Ausblasvorrichtung 27 sowie die Ausblasvorrichtung 31 an bevorzugter Position entlang der Förderbahn 16 angeordnet. Die Darstellung zeigt in schematischer Weise auch die Anordnung und Ausrichtung der Lichtschranken 15, 14 und 43 sowie des Ultraschallsensors 25. Die Vorformlinge 2 werden dabei in Förderrichtung 42 durch diese Komponenten zur Ablaufschiene 9 gefördert. Alle Vorformlinge 2, welche falsch und/oder störend vorhanden sind, werden durch die Kombination dieser Komponenten vor der Ablauf schiene 9 aus der Förderbahn 16 entfernt oder in eine korrekte Position gebracht.

### BEZUGSZEICHENLISTE

- 1: Vereinzelungseinrichtung
- 2: zylindrischer Körper (Vorformling)
- 3: Zylinderteil, zweites Ende (2)
- 4: Endbereich, erstes Ende (2)
- 5: Kragen (2)
- 6: Gewindestutzen (2)
- 7: Führungsrollen (1)
- 8: Einzelreihe
- 9: Ablaufschiene
- 10: Höhenführung (1)
- 11: Hubvorrichtung (1)
- 12: Zwischenraum
- 13: Verklemmungs-Detektionseinrichtung (1)
- 14: erste Lichtschranke (13)
- 15: zweite Lichtschranke (13)
- 16: Förderbahn
- 17: Rückstaurad, Kickerrad (1)
- 18: Schaufel (17)
- 19: Ausnehmung (18)
- 20: Hubzylinder (11)
- 21: Auswurfvorrichtung (1)
- 22: Parallellage-Detektionseinrichtung (21)
- 23: Präsenzdetektor (22)
- 24: Lagedetektor (22)
- 25: Ultraschallsensor (24)
- 26: Auswurfsmittel (21)
- 27: Ausblasvorrichtung (21)
- 28: Auflagedetektionseinrichtung (1)
- 29: Lichtschranke (28)
- 30: Strahl
- 31: Ausblasvorrichtung (28)
- 32: Reflektor (14)
- 33: Reflektor (15)
- 34: Reflektor (22)
- 35: Reflektor (29)
- 36: Beschickungseinrichtung
- 37: Fördereinrichtung
- 38: Übernahmeeinrichtung
- 39: Formgebungseinrichtung
- 40: Austrittsende (1)
- 41: Rollenförderer (1)
- 42: Förderrichtung
- 43: Lichtschranke (22)
- 44: Erfassungsbereich
- 45: Auffangvorrichtung
- 46: Luftdüsen (31)

## Patentansprüche

1. Vereinzelungseinrichtung (1) für zylindrische Körper (2), wie Vorformlinge für Hohlkörper, welche an einem ersten Ende mindestens eine Auskragung (5) aufweisen und an einem zweiten Ende einen Durchmesser aufweisen, der geringer als der Durchmesser der Auskragung (5) ist, wobei die Vereinzelungseinrichtung (1) ein Paar parallel angeordneter Führungselemente (7) aufweist, zwischen welchen die zylindrischen Körper (2) aufrichtbar sind, indem die zylindrischen Körper (2) jeweils mit der Auskragung (5) an den Führungselementen (7) hängen und die zylindrischen Körper (2) eine Einzelreihe (8) entlang der Führungselemente (7) bilden und so zu einem Ablauf (9) zum Weiterfördern der zylindrischen Körper (2) führbar sind wobei die Vereinzelungseinrichtung (1) eine über der Einzelreihe (8) angeordnete Höhenführung (10) aufweist, wobei sich ein Abstand zwischen der Höhenführung (10) und den zylindrischen Körpern (2), in Förderrichtung gesehen, bis zu einem vorgegebenen Abstand zu den Führungselementen (7) verringert, wodurch vertikal vorstehende zylindrische Körper (2), wenn sie in Förderrichtung gefördert werden, durch die Höhenführung (10) nach unten gedrückt werden, **dadurch gekennzeichnet, dass** die Höhenführung (10) mittels einer Hubvorrichtung (11) nach Massgabe eines Auslösesignals kurzzeitig anhebbar ist.

2. Vereinzelungseinrichtung (1) gemäss Anspruch 1, **dadurch gekennzeichnet, dass** die Führungselemente (7) Rollen sind, insbesondere gegenläufig rotierende Rollen, und die zylindrischen Körper (2) in einem Zwischenraum (12) zwischen den Rollen (7) gefördert werden.

3. Vereinzelungseinrichtung (1) gemäss Anspruch 1 oder 2, **dadurch gekennzeichnet, dass** die Vereinzelungseinrichtung (1) eine Verklemmungs-Detektionseinrichtung (13) aufweist, welche dazu ausgebildet ist, ein Anstehen eines oder mehrerer zylindrischen Körpers (2) an der Höhenführung (10) zu detektieren und darauf das Auslösesignal zum Anheben der Höhenführung (10) zu erzeugen.

4. Vereinzelungseinrichtung (1) gemäss Anspruch 3, **dadurch gekennzeichnet, dass** die Verklemmungs-Detektionseinrichtung (13) dazu ausgebildet ist, zu erfassen, ob zylindrische Körper (2) in Förderrichtung vor der Höhenführung (10) anstehen und ob in einem Bereich nach der Höhenführung (10) keine zylindrischen Körper (2) vorliegen, und wenn diese beiden Bedingungen erfüllt sind, das Auslösesignal zu erzeugen.

5. Vereinzelungseinrichtung (1) gemäss Anspruch 3 oder 4, **dadurch gekennzeichnet, dass** die Verklemmungs-Detektionseinrichtung (13) einen ersten Präsenzdetektor, insbesondere eine erste Lichtschranke (14), aufweist, welche in einem Bereich einer Förderbahn (16) der zylindrischen Körper (2) vor der Höhenführung (10) das Vorhandensein von zylindrischen Körpern (2) detektiert, und einen zweiten Präsenzdetektor, insbesondere eine zweite Lichtschranke (15), welche in einem Bereich der Förderbahn (16) der zylindrischen Körper (2) nach der Höhenführung (10) das Vorhandensein von zylindrischen Körpern (2) detektiert.

6. Vereinzelungseinrichtung (1) gemäss Anspruch 5, **dadurch gekennzeichnet, dass** einer oder beide Präsenzdetektoren eine Lichtschranke (14), (15) ist respektive sind, und bezüglich der Förderbahn (16) jeweils so angeordnet ist respektive sind, dass der Strahl der Lichtschranke (14), (15), wenn die zylindrischen Körper (2) auf der Förderbahn (16) unmittelbar aufeinander folgen, jeweils durch mehrere der zylindrischen Körper (2) führt.

7. Vereinzelungseinrichtung (1) gemäss einem der bisherigen Anspruche, **dadurch gekennzeichnet, dass** die Höhenführung (10) im Bereich eines Rückstaurades (17) angeordnet ist, und Schaufeln (18) des Rückstaurades (17) jeweils eine Ausnehmung (19) aufweisen, welche mit der Form der Höhenführung (10) korrespondiert, und die Schaufeln (18) mindestens in einem Bereich, in welchem die Höhenführung (10) noch nicht wirksam ist, nach unten über die Höhenführung (10) hinausragen.

8. Vereinzelungseinrichtung (1) gemäss einem der bisherigen Ansprüche, **dadurch gekennzeichnet, dass** die Vereinzelungseinrichtung (1) eine Auswurfvorrichtung (21) aufweist, welche zylindrische Körper (2), die zwar mit der Auskragung (5) an den Führungselementen (7) hängen, aber deren zweites Ende (3) nicht nach unten hängt, detektiert und aus der Einzelreihe (8) auswirft.

9. Vereinzelungseinrichtung (1) gemäss Anspruch 8, **dadurch gekennzeichnet, dass** die Auswurfvorrichtung (21) eine Parallellage-Detektionseinrichtung (22) mit einem Präsenzdetektor (23) und einem Lagedetektor (24) aufweist, wobei der Präsenzdetektor (23) das Vorhandensein eines zylindrischen Körpers (2) zwischen den Führungselementen (7) bestimmt und der Lagedetektor (24) die Orientierung des zylindrischen Körpers (2) bestimmt, und die Parallellage-Detektionseinrichtung (22) beim Vorhandensein eines zylindrischen Körpers (2), der eine falsche Orientierung aufweist, das Auswerfen des zylindrischen Körpers (2) auslöst.

10. Vereinzelungseinrichtung (1) gemäss Anspruch 9, **dadurch gekennzeichnet, dass** der Präsenzdetektor (23) eine Lichtschranke ist, und insbesondere der Strahl der Lichtschranke (23) von oben nach unten oder umgekehrt durch die Einzelreihe (8) der zylindrischen Körper (2) führt.

11. Vereinzelungseinrichtung (1) gemäss Anspruch 9 oder 10, **dadurch gekennzeichnet, dass** der Lagedetektor (24) ein Vorhandensein der zweiten Enden (3) der zylindrischen Körper (2) in einem Bereich unter den Führungselementen (7) detektiert.

12. Vereinzelungseinrichtung (1) gemäss einem der Ansprüche 9 bis 11, **dadurch gekennzeichnet, dass** der Lagedetektor (24) einen Ultraschallsensor (25) aufweist, der die Distanz vom Ultraschallsensor (25) zur erwarteten Position der zweiten Enden (3) der zylindrischen Körper (2) misst, und falls diese Distanz einen vorgegebenen Wert überschreitet, der Lagedetektor (24) eine falsche Orientierung des entsprechenden zylindrischen Körpers (2) signalisiert.

13. Vereinzelungseinrichtung (1) gemäss einem der Ansprüche 8 bis 12, **dadurch gekennzeichnet, dass** die Auswurfvorrichtung (21) ein bewegliches Auswurfsmittel (26) aufweist, welches zum Auswerfen eines falsch orientierten zylindrischen Körpers (2) von unten her zwischen die Führungselemente (7) hindurch fährt und so diesen zylindrischen Körper (2) anhebt und auswirft.

14. Vereinzelungseinrichtung (1) gemäss einem der Ansprüche 8 bis 13, **dadurch gekennzeichnet, dass** die Auswurfvorrichtung (21) eine zugeordnete Ausblasvorrichtung (27) zum seitlichen Wegblasen nach dem Anheben eines zylindrischen Körpers (2) aufweist.

15. Vereinzelungseinrichtung (1) gemäss einem der bisherigen Ansprüche, **dadurch gekennzeichnet, dass** die Vereinzelungseinrichtung (1) ferner eine Auflagedetektionseinrichtung (28) aufweist, welche erfasst, ob ein zylindrischer Körper (2) auf den in der Einzelreihe (8) geförderten zylindrischen Körper (2) aufliegt, und, wenn dies der Fall ist, eine zugeordnete Ausblasvorrichtung (31) zum seitlichen Wegblasen eines zylindrischen Körpers (2) von den Führungselementen (7) respektive der Einzelreihe (8) aktiviert.

16. Vereinzelungseinrichtung (1) gemäss Anspruch 15, **dadurch gekennzeichnet, dass** die Auflagedetektionseinrichtung (28) eine Lichtschranke (29) aufweist, deren Strahl (30) im wesentlichen horizontal und im Winkel zum Verlauf der Führungselemente (7) respektive der Einzelreihe (8) verläuft, und deren Höhe so eingestellt ist, dass die Lichtschranke (28) bei übereinander aufliegenden zylindrischen Körpern (2) anspricht.

17. Vereinzelungseinrichtung (1) gemäss Anspruch 15 oder 16 in Abhängigkeit von Anspruch 14, **dadurch gekennzeichnet, dass** die Ausblasvorrichtung (27), welche der Auswurfvorrichtung (21) zugeordnet ist, mit der Ausblasvorrichtung (31), welche der Auflagedetektionseinrichtung (28) zugeordnet ist, identisch ist.

18. Verfahren zum Vereinzeln von zylindrischen Körpern (2), beispielsweise Vorformlinge für Hohlkörper, welche an einem ersten Ende mindestens eine Auskragung (5) aufweisen und an einem zweiten Ende einen Durchmesser aufweisen, der geringer als der Durchmesser der Auskragung (5) ist, wobei die zylindrischen Körper (2) zwischen einem Paar parallel angeordneter Führungselemente (7) aufgerichtet werden, indem die zylindrischen Körper (2) jeweils mit der Auskragung (5) an den Führungselementen (7) hängen und die zylindrischen Körper (2) eine Einzelreihe (8) entlang der Führungselemente (7) bilden und so zu einem Ablauf (9) zum Weiterfördern der zylindrischen Körper (2) geführt werden, wobei die zylindrischen Körper (2), unter einer über der Einzelreihe (8) angeordnete Höhenführung (10) hindurch gefördert werden, wobei sich ein Abstand zwischen der Höhenführung (10) und den zylindrischen Körpern (2), in Förderrichtung gesehen, bis zu einem vorgegebenen Abstand zu den Führungselementen (7) verringert, wodurch vertikal vorstehende zylindrische Körper (2), indem sie in Förderrichtung gefördert werden, durch die Höhenführung (10) nach unten gedrückt werden, **dadurch gekennzeichnet, dass** die Höhenführung (10) mittels einer Hubvorrichtung (11) nach Massgabe eines Auslösesignals kurzzeitig angehoben wird.

19. Verfahren gemäss Anspruch 18, **dadurch gekennzeichnet, dass** bestimmt wird, ob ein zylindrischer Körper (2) zwar an einer vorgegebenen Stelle entlang der Führungselemente vorliegt, aber nicht an der Auskragung (5) nach unten hängt, und, falls dies der Fall ist, der zylindrische Körper (2) aus der Einzelreihe (8) ausgeworfen wird.

20. Verfahren gemäss Anspruch 18 oder 19, **dadurch gekennzeichnet, dass** bestimmt wird, ob ein zylindrischer Körper (2) auf den in der Einzelreihe (8) geförderten zylindrischen Körper (2) aufliegt, und, wenn dies der Fall ist, der zylindrische Körpers (2) von den Führungselementen (7) respektive der Einzelreihe (8) weggeblasen wird.

## Claims

1. A separating device (1) for cylindrical bodies (2), such as preforms for hollow bodies, which have at least one projection (5) at a first end and a diameter which is smaller than the diameter of the projection (5) at a second end, wherein the separating device (1) has a pair of parallel-arranged guide elements (7) between which the cylindrical bodies (2) may be arranged upright in that the cylindrical bodies (2) each hang on the guide elements (7) by means of the projection (5) and the cylindrical bodies (2) form a single row (8) along the guide elements (7) and may thus be guided to an outlet (9) for conveying the cylindrical bodies (2) further, wherein the separating device (1) has a vertical guide (10) arranged above the single row (8), wherein a spacing between the vertical guide (10) and the cylindrical bodies (2), as seen in the conveying direction, decreases to a predetermined spacing from the guide elements (7), whereby vertically protruding cylindrical bodies (2) are pressed downwards by the vertical guide (10) as they are conveyed in the conveying direction, **characterised in that** the vertical guide (10) may be lifted briefly by means of a lifting device (11) in accordance with a trigger signal.

2. A separating device (1) according to Claim 1, **characterised in that** the guide elements (7) are rollers, in particular counter-rotating rollers, and the cylindrical bodies (2) are conveyed in a clearance (12) between the rollers (7).

3. A separating device (1) according to Claim 1 or 2, **characterised in that** the separating device (1) has a jam detection device (13) which is designed to detect when one or more cylindrical bodies (2) are waiting at the vertical guide (10) and then generate the trigger signal for lifting the vertical guide (10).

4. A separating device (1) according to Claim 3, **characterised in that** the jam detection device (13) is designed to detect whether cylindrical bodies (2) are waiting upstream of the vertical guide (10) in the conveying direction and whether there are no cylindrical bodies (2) present in a region downstream of the vertical guide (10) and, if these two conditions are fulfilled, to generate the trigger signal.

5. A separating device (1) according to Claim 3 or 4, **characterised in that** the jam detection device (13) has a first presence detector, in particular a first light barrier (14), which detects the presence of cylindrical bodies (2) in a region of a conveying path (16) of the cylindrical bodies (2) upstream of the vertical guide (10), and a second presence detector, in particular a second light barrier (15), which detects the presence of cylindrical bodies (2) in a region of the conveying path (16) of the cylindrical bodies (2) downstream of the vertical guide (10).

6. A separating device (1) according to Claim 5, **characterised in that** one or both presence detectors is or are a light barrier (14), (15) and is or are arranged with respect to the conveying path (16) in each case such that the beam of the light barrier (14), (15) is directed in each case through a plurality of the cylindrical bodies (2) when the cylindrical bodies (2) directly follow one another on the conveying path (16).

7. A separating device (1) according to one of the preceding claims, **characterised in that** the vertical guide (10) is arranged in the region of a back-pressure wheel (17) and blades (18) of the back-pressure wheel (17) each have an opening (19) which corresponds to the shape of the vertical guide (10), and the blades (18) project downwards beyond the vertical guide (10) at least in a region in which the vertical guide (10) is not yet effective.

8. A separating device (1) according to one of the preceding claims, **characterised in that** the separating device (1) has an ejection device (21) which detects cylindrical bodies (2) which, although they are hanging on the guide elements (7) by means of the projection (5), do not have their second end (3) hanging downwards and ejects them from the single row (8).

9. A separating device (1) according to Claim 8, **characterised in that** the ejection device (21) has a parallel-position detection device (22) with a presence detector (23) and a position detector (24), wherein the presence detector (23) determines the presence of a cylindrical body (2) between the guide elements (7) and the position detector (24) determines the orientation of the cylindrical body (2) and, if an incorrectly orientated cylindrical body (2) is present, the parallel-position detection device (22) triggers the ejection of the cylindrical body (2).

10. A separating device (1) according to Claim 9, **characterised in that** the presence detector (23) is a light barrier, and in particular the beam of the light barrier (23) is directed from the top down, or vice versa, through the single row (8) of the cylindrical bodies (2).

11. A separating device (1) according to Claim 9 or 10, **characterised in that** the position detector (24) detects the presence of the second ends (3) of the cylindrical bodies (2) in a region below the guide elements (7).

12. A separating device (1) according to one of Claims 9 to 11, **characterised in that** the position detector (24) has an ultrasound sensor (25) which measures the distance from the ultrasound sensor (25) to the expected position of the second ends (3) of the cylindrical bodies (2) and, if this distance exceeds a predetermined value, the position detector (24) signals an incorrect orientation of the corresponding cylindrical body (2).

13. A separating device (1) according to one of Claims 8 to 12, **characterised in that** the ejection device (21) has a movable ejection means (26) which, to eject an incorrectly orientated cylindrical body (2), moves through between the guide elements (7) from below and thus lifts this cylindrical body (2) and ejects it.

14. A separating device (1) according to one of Claims 8 to 13, **characterised in that** the ejection device (21) has an associated blow-ejection device (27) for blowing a cylindrical body (2) away laterally after it has been lifted.

15. A separating device (1) according to one of the preceding claims, **characterised in that** the separating device (1) further has a resting detection device (28) which detects whether a cylindrical body (2) is resting on the cylindrical bodies (2) conveyed in the single row (8) and, if this is the case, activates an associated blow-ejection device (31) for blowing a cylindrical body (2) away laterally from the guide elements (7) or the single row (8).

16. A separating device (1) according to Claim 15, **characterised in that** the resting detection device (28) has a light barrier (29) whereof the beam (30) extends substantially horizontally and at an angle to the course of the guide elements (7) or the single row (8) and whereof the height is set so that the light barrier (28) responds when cylindrical bodies (2) are resting on top of one another.

17. A separating device (1) according to Claim 15 or 16 in dependence on Claim 14, **characterised in that** the blow-ejection device (27) which is associated with the ejection device (21) is identical to the blow-ejection device (31) which is associated with the resting detection device (28).

18. A process for separating cylindrical bodies (2), for example preforms for hollow bodies, which have at least one projection (5) at a first end and a diameter which is smaller than the diameter of the projection (5) at a second end, wherein the cylindrical bodies (2) are arranged upright between a pair of parallel-arranged guide elements (7) in that the cylindrical bodies (2) each hang on the guide elements (7) by means of the projection (5) and the cylindrical bodies (2) form a single row (8) along the guide elements (7) and are thus guided to an outlet (9) for conveying the cylindrical bodies (2) further, wherein the cylindrical bodies (2) are guided through below a vertical guide (10) arranged above the single row (8), wherein a spacing between the vertical guide (10) and the cylindrical bodies (2), as seen in the conveying direction, decreases to a predetermined spacing from the guide elements (7) whereby vertically protruding cylindrical bodies (2) are pressed downwards by the vertical guide (10) as they are conveyed in the conveying direction, **characterised in that** the vertical guide (10) is lifted briefly by means of a lifting device (11) in accordance with a trigger signal.

19. A process according to Claim 18, **characterised in that** it is determined whether a cylindrical body (2) is present at a predetermined point along the guide elements but does not hang down on the projection (5) and, if this is the case, the cylindrical body (2) is expelled out of the single row (8).

20. A process according to Claim 18 or 19, **characterised in that** it is determined whether a cylindrical body (2) is resting on the cylindrical bodies (2) conveyed in the single row (8) and, if this is the case, the cylindrical body (2) is blown away from the guide elements (7) or the single row (8).

## Revendications

1. Dispositif séparateur (1) pour corps cylindriques (2), tels que des ébauches ou préformes pour corps creux, qui présentent, à une première extrémité, au moins une collerette (5), et, à une deuxième extrémité, un diamètre qui est inférieur au diamètre de la collerette (5), le dispositif séparateur (1) présentant une paire d'éléments de guidage (7) agencés de manière mutuellement parallèle, entre lesquels les corps cylindriques (2) peuvent être redressés, à savoir que les corps cylindriques (2) sont suspendus chacun par la collerette (5) aux éléments de guidage (7) et les corps cylindriques (2) forment une rangée individuelle (8) le long des éléments de guidage (7) et peuvent ainsi être menés vers une sortie (9) pour la poursuite du convoyage ou du transport des corps cylindriques (2), le dispositif séparateur (1) comprenant un guidage de hauteur (10) agencé au-dessus de la rangée individuelle (8), une distance entre le guidage de hauteur (10) et les corps cylindriques (2), vu dans la direction de transport ou de convoyage, se réduisant jusqu'à une distance prédéterminée par rapport aux éléments de guidage (7), ce qui fait que des corps cylindriques (2) dépassant verticalement, lorsqu'ils sont transportés dans la direction de transport, sont repoussés vers le bas par le dispositif de guidage de hauteur (10), **caractérisé en ce que** le dispositif de guidage de hauteur (10) peut être soulevé brièvement au moyen d'un dispositif de levage (11) conformément à un signal de déclenchement.

2. Dispositif séparateur (1) selon la revendication 1, **caractérisé en ce que** les éléments de guidage (7) sont des rouleaux, notamment en rotation opposée, et les corps cylindriques (2) sont transportés dans un espace intermédiaire (12) entre les rouleaux (7).

3. Dispositif séparateur (1) selon la revendication 1 ou la revendication 2, **caractérisé en ce que** le dispositif séparateur (1) comprend un dispositif de détection de coincement (13), qui est conçu pour détecter un blocage d'un ou de plusieurs corps cylindriques (2) contre le guidage de hauteur (10), et engendrer alors le signal de déclenchement pour soulever le guidage de hauteur (10).

4. Dispositif séparateur (1) selon la revendication 3, **caractérisé en ce que** le dispositif de détection de coincement (13) est conçu pour détecter si des corps cylindriques (2) sont, en se référant à la direction de transport, bloqués devant le guidage de hauteur (10) et si dans une zone après le guidage de hauteur (10), il n'y a pas de corps cylindriques (2) présents, et engendrer le signal de déclenchement lorsque ces deux conditions sont remplies.

5. Dispositif séparateur (1) selon la revendication 3 ou la revendication 4, **caractérisé en ce que** le dispositif de détection de coincement (13) comporte un premier détecteur de présence, notamment une première barrière photoélectrique (14), qui détecte la présence de corps cylindriques (2) dans une zone d'une voie de transport ou de convoyage (16) des corps cylindriques (2), située devant le guidage de hauteur (10), ainsi qu'un deuxième détecteur de présence, notamment une deuxième barrière photoélectrique (15), qui détecte la présence de corps cylindriques (2) dans une zone de la voie de transport (16) des corps cylindriques (2) située après le guidage de hauteur (10).

6. Dispositif séparateur (1) selon la revendication 5, **caractérisé en ce que** l'un ou les deux détecteurs de présence est une barrière photoélectrique ou respectivement sont des barrières photoélectriques (14), (15), et est agencé ou respectivement sont agencés chacun par rapport à la voie de transport (16) de manière telle, que le rayon de la barrière photoélectrique (14), (15), lorsque les corps cylindriques (2) se succèdent directement sur la voie de transport (16), passe respectivement par plusieurs des corps cylindriques (2).

7. Dispositif séparateur (1) selon l'une des revendications précédentes, **caractérisé en ce que** le guidage de hauteur (10) est agencé dans la zone d'une roue de retenue (17), et des aubes (18) de la roue de retenue (17) présentent chacune une encoche (19) qui correspond à la forme du guidage de hauteur (10), et les aubes (18) dépassent du guidage de hauteur (10) vers le bas, au moins dans une zone dans laquelle le guidage de hauteur (10) n'est pas encore actif.

8. Dispositif séparateur (1) selon l'une des revendications précédentes, **caractérisé en ce que** le dispositif séparateur (1) présente un dispositif d'éjection (21), qui détecte et éjecte de la rangée individuelle (8) des corps cylindriques (2), qui certes sont suspendus par la collerette (5) sur les éléments de guidage (7), mais dont la deuxième extrémité (3) ne pend pas vers le bas.

9. Dispositif séparateur (1) selon la revendication 8, **caractérisé en ce que** le dispositif d'éjection (21) comprend un dispositif de détection de position parallèle (22) avec un détecteur de présence (23) et un détecteur de position (24), le détecteur de présence (23) déterminant la présence d'un corps cylindrique (2) entre les éléments de guidage (7) et le détecteur de position (24) déterminant l'orientation du corps cylindrique (2), et **en ce que** le dispositif de détection de position parallèle (22) déclenche, en cas de présence d'un corps cylindrique (2), qui présente une orientation incorrecte, l'éjection du corps cylindrique (2).

10. Dispositif séparateur (1) selon la revendication 9, **caractérisé en ce que** le détecteur de présence (23) est une barrière photoélectrique, et en particulier le rayon lumineux de la barrière photoélectrique (23) mène du haut vers le bas ou inversement à travers la rangée individuelle (8) des corps cylindriques (2).

11. Dispositif séparateur (1) selon la revendication 9 ou la revendication 10, **caractérisé en ce que** le détecteur de position (24) détecte une présence des deuxièmes extrémités (3) des corps cylindriques (2), dans une zone sous les éléments de guidage (7).

12. Dispositif séparateur (1) selon l'une des revendications 9 à 11, **caractérisé en ce que** le détecteur de position (24) comprend un détecteur à ultrasons (25), qui mesure la distance du détecteur à ultrasons (25) à la position attendue des deuxièmes extrémités (3) des corps cylindriques (2), et, dans le cas où cette distance dépasse une valeur prédéterminée, le détecteur de position (24) signale une orientation incorrecte du corps cylindrique (2) correspondant.

13. Dispositif séparateur (1) selon l'une des revendications 8 à 12, **caractérisé en ce que** le dispositif d'éjection (21) comprend un moyen d'éjection mobile (26), qui, pour l'éjection d'un corps cylindrique (2) d'orientation incorrecte, se déplace à partir du bas, entre les éléments de guidage (7), en soulevant ainsi ce corps cylindrique (2) et en l'éjectant.

14. Dispositif séparateur (1) selon l'une des revendications 8 à 13, **caractérisé en ce que** le dispositif d'éjection (21) comprend un dispositif de soufflage (27) associé, pour l'évacuation latérale par soufflage après le soulèvement d'un corps cylindrique (2).

15. Dispositif séparateur (1) selon l'une des revendications précédentes, **caractérisé en ce que** le dispositif séparateur (1) comprend par ailleurs un dispositif de détection de superposition (28), qui détecte si un corps cylindrique (2) repose sur les corps cylindriques (2) transportés ou convoyés dans la rangée individuelle (8), et, si cela est le cas, active un dispositif de soufflage (31) associé, pour l'évacuation latérale par soufflage d'un corps cylindrique (2), en le dégageant des éléments de guidage (7) respectivement de la rangée individuelle (8).

16. Dispositif séparateur (1) selon la revendication 15, **caractérisé en ce que** le dispositif de détection de superposition (28) comprend une barrière photoélectrique (29) dont le rayon (30) s'étend sensiblement horizontalement et en formant un angle par rapport au parcours des éléments de guidage (7) respectivement de la rangée individuelle (8), et dont la hauteur est réglée de façon telle que la barrière photoélectrique (28) déclenche dans le cas de corps cylindriques (2) superposés.

17. Dispositif séparateur (1) selon la revendication 15 ou la revendication 16, en relation avec la revendication 14, **caractérisé en ce que** le dispositif de soufflage (27), qui est associé au dispositif d'éjection (21), est identique au dispositif de soufflage (31), qui est associé au dispositif de détection de superposition (28).

18. Procédé pour séparer des corps cylindriques (2), par exemple des ébauches ou préformes pour corps creux, qui présentent, à une première extrémité, au moins une collerette (5), et, à une deuxième extrémité, un diamètre qui est inférieur au diamètre de la collerette (5), les corps cylindriques (2) pouvant être redressés entre une paire d'éléments de guidage (7) agencés de manière mutuellement parallèle, à savoir que les corps cylindriques (2) sont suspendus chacun par la collerette (5) aux éléments de guidage (7) et les corps cylindriques (2) forment une rangée individuelle (8) le long des éléments de guidage (7) et sont ainsi menés vers une sortie (9) pour la poursuite du transport ou du convoyage des corps cylindriques (2), les corps cylindriques (2) étant transportés ou convoyés sous un guidage de hauteur (10) agencé au-dessus de la rangée individuelle (8), une distance entre le guidage de hauteur (10) et les corps cylindriques (2), vu dans la direction de transport ou de convoyage, se réduisant jusqu'à une distance prédéterminée des éléments de guidage (7), ce qui fait que des corps cylindriques (2) dépassant verticalement, lorsqu'ils sont transportés dans la direction de transport, sont repoussés vers le bas par le dispositif de guidage de hauteur (10), **caractérisé en ce que** le dispositif de guidage de hauteur (10) est soulevé brièvement au moyen d'un dispositif de levage (11) conformément à un signal de déclenchement.

19. Procédé selon la revendication 18, **caractérisé en ce que** l'on détermine si un corps cylindrique (2) est certes présent en un endroit prédéterminé le long des éléments de guidage, mais n'est pas suspendu à la collerette (5), vers le bas, et si cela est le cas, le corps cylindrique (2) est éjecté hors de la rangée individuelle (8).

20. Procédé selon la revendication 18 ou la revendication 19, **caractérisé en ce que** l'on détermine si un corps cylindrique (2) repose sur les corps cylindriques (2) transportés ou convoyés dans la rangée individuelle (8), et, si cela est le cas, le corps cylindrique (2) est évacué par soufflage en le dégageant des éléments de guidage (7) respectivement de la rangée individuelle (8).
